(19)

Europäisches
Patentamt
European
Patent Office
Office européen
des brevets

(11)　**EP 2 791 905 B1**

(12)　**EUROPEAN PATENT SPECIFICATION**

(45) Date of publication and mention
of the grant of the patent:
**02.08.2017 Bulletin 2017/31**

(21) Application number: **12818804.2**

(22) Date of filing: **13.12.2012**

(51) Int Cl.:
***G06T 7/40*** *(2017.01)*

(86) International application number:
**PCT/HU2012/000135**

(87) International publication number:
**WO 2013/088183 (20.06.2013 Gazette 2013/25)**

(54) **METHOD FOR DECOMPOSING AN IMAGE CONSISTING OF PIXELS TO CARTOON IMAGE AND/OR TEXTURE IMAGE**

VERFAHREN ZUR ZERSETZUNG EINES BILDES AUS PIXELN ZU EINEM KARIKATURBILD UND/ODER TEXTURBILD

PROCÉDÉ DE DÉCOMPOSITION D'UNE IMAGE COMPRENANT DES PIXELS EN IMAGE DE DESSIN ANIMÉ ET/OU IMAGE DE TEXTURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.12.2011 HU P1100682**

(43) Date of publication of application:
**22.10.2014 Bulletin 2014/43**

(73) Proprietors:
• **MTA Számítástechnikai és Automatizálási
Kutató Intézet
1111 Budapest (HU)**
• **Pázmány Péter Katolikus Egyetem
1088 Budapest (HU)**

(72) Inventors:
• **SZIRÁNYI, Tamás
H-1147 Budapest (HU)**
• **SZOLGAY, Dániel
H-2000 Szentendre (HU)**

(74) Representative: **Gödölle, Istvan
Gödölle, Kékes, Mészáros & Szabó
Patent and Trademark Attorneys
Keleti Károly u. 13/b
1024 Budapest (HU)**

(56) References cited:
• **AJIT RAJWADE ET AL: "Automated Filter
Parameter Selection Using Measures of
Noiseness", COMPUTER AND ROBOT VISION
(CRV), 2010 CANADIAN CONFERENCE ON, IEEE,
PISCATAWAY, NJ, USA, 31 May 2010
(2010-05-31), pages 86-93, XP031686095, ISBN:
978-1-4244-6963-5**
• **PAVEL MRÁZEK ET AL: "Selection of Optimal
Stopping Time for Nonlinear Diffusion Filtering",
INTERNATIONAL JOURNAL OF COMPUTER
VISION, vol. 52, no. 2-3, 1 May 2003 (2003-05-01),
pages 189-203, XP055057538,**
• **SZOLGAY D ET AL: "Adaptive Image
Decomposition into Cartoon and Texture Parts
Optimized by the Orthogonality Criterion", IEEE
TRANSACTIONS ON IMAGE PROCESSING, IEEE
SERVICE CENTER, PISCATAWAY, NJ, US, vol.
21, no. 8, 1 August 2012 (2012-08-01) , pages
3405-3415, XP011492107, ISSN: 1057-7149, DOI:
10.1109/TIP.2012.2192128**
• **TAMÁS SZIRÁNYI ET AL: "Geometrical and
Textural Component Separation with Adaptive
Scale Selection", 13 December 2011 (2011-12-13),
COMPUTATIONAL INTELLIGENCE FOR
MULTIMEDIA UNDERSTANDING, SPRINGER
BERLIN HEIDELBERG, BERLIN, HEIDELBERG,
PAGE(S) 66 - 77, XP047016580, ISBN:
978-3-642-32435-2 the whole document**

EP 2 791 905 B1

**(Cont. next page)**

- ANTONI BUADES ET AL: "Fast Cartoon + Texture Image Filters", IEEE TRANSACTIONS ON IMAGE PROCESSING, IEEE SERVICE CENTER, PISCATAWAY, NJ, US, vol. 19, no. 8, 1 August 2010 (2010-08-01) , pages 1978-1986, XP011328585, ISSN: 1057-7149, DOI: 10.1109/TIP.2010.2046605 cited in the application
- JEAN-FRANÇOIS AUJOL ET AL: "Constrained and SNR-Based Solutions for TV-Hilbert Space Image Denoising", JOURNAL OF MATHEMATICAL IMAGING AND VISION, KLUWER ACADEMIC PUBLISHERS, BO, vol. 26, no. 1-2, 14 August 2006 (2006-08-14), pages 217-237, XP019450792, ISSN: 1573-7683, DOI: 10.1007/S10851-006-7801-6 cited in the application
- SZOLGAY D ET AL: "Optimal stopping condition for iterative image deconvolution by new orthogonality criterion", ELECTRONIC LETTERS, THE INSTITUTION OF ENGINEERING AND TECHNOLOGY, vol. 47, no. 7, 31 March 2011 (2011-03-31) , pages 442-444, XP006038582, ISSN: 1350-911X, DOI: 10.1049/EL:20103692 cited in the application
- FAN ZHANG ET AL: "Image Decomposition and Texture Segmentation via Sparse Representation", IEEE SIGNAL PROCESSING LETTERS, IEEE SERVICE CENTER, PISCATAWAY, NJ, US, vol. 15, 1 January 2008 (2008-01-01), pages 641-644, XP011235987, ISSN: 1070-9908 cited in the application
- SHAHIDI R ET AL: "Decorrelating the Structure and Texture Components of a Variational Decomposition Model", IEEE TRANSACTIONS ON IMAGE PROCESSING, IEEE SERVICE CENTER, PISCATAWAY, NJ, US, vol. 17, no. 2, 1 February 2009 (2009-02-01), pages 299-309, XP011249305, ISSN: 1057-7149 cited in the application
- WOTAO YIN ET AL: "Image Cartoon-Texture Decomposition and Feature Selection Using the Total Variation Regularized L1 Functional", 1 January 2005 (2005-01-01), VARIATIONAL, GEOMETRIC, AND LEVEL SET METHODS IN COMPUTER VISION : THIRD INTERNATIONAL WORKSHOP, VLSM 2005, BEIJING, CHINA, OCTOBER 16, 2005 ; PROCEEDINGS; [LECTURE NOTES IN COMPUTER SCIENCE ; 3752], SPRINGER, BERLIN, DE, PAGE(S) 73 - 84, XP019021885, ISBN: 978-3-540-29348-4 cited in the application the whole document
- RUDIN L I ET AL: "Nonlinear total variation based noise removal algorithms", PHYSICA D, NORTH-HOLLAND, AMSTERDAM, NL, vol. 60, no. 1-4, 1 November 1992 (1992-11-01), pages 259-268, XP024492805, ISSN: 0167-2789, DOI: 10.1016/0167-2789(92)90242-F [retrieved on 1992-11-01] cited in the application
- PIETRO PERONA ET AL: "SCALE-SPACE AND EDGE DETECTION USING ANISOTROPIC DIFFUSION", TRANSACTIONS ON PATTERN ANALYSIS AND MACHINE INTELLIGENCE, IEEE, PISCATAWAY, USA, vol. 12, no. 7, 1 July 1990 (1990-07-01), pages 629-639, XP000136967, ISSN: 0162-8828, DOI: 10.1109/34.56205 cited in the application

**Description**

TECHNICAL FIELD

The invention relates to a method for decomposing an image consisting of pixels to cartoon image and/or texture image.

PRIOR ART

Image decomposition into separable, for instance geometrical-cartoon and textural components is the substantive part of many image processing methods. In the ideal cartoon image of an image only the outlines of the shapes of the image and the colour characteristic of the shapes, and in its ideal texture image the patterns characteristic of each shape appear. A method for image decomposition into its cartoon and texture components can be useful by way of example in the following image processing areas:

- in image compression, where the separate compression of the image cartoon and texture could provide a better result compared to the method when an image is compressed without decomposition (N. Sprljan, M. Mrak, and E. Izquierdo, Image compression using a cartoon-texture decomposition technique, Proc. Int. Work. on Image Analysis for Multimedia Interactive Services (WIAMIS), p. 91 (2004)),
- in noise removal (S. Osher, A. Sole, and L. Vese, Image decomposition and restoration using total variation minimization and the h-1 norm, Sci. Multiscale Model. Simul, Vol. 1, pp. 349-370 (2002); L. I. Rudin, S. Osher, and E. Fatemi, Nonlinear total variation based noise removal algorithms, Phys. D, Vol. 60, pp. 259-268 (1992)), because a zero mean oscillating noise may function as a fine texture, and therefore by decomposing the image into cartoon and texture components, the noise can be separated,
- in 2D and 3D computer graphics and edge detection (A. Buades, T. Le, J.-M. Morel, and L. Vese, Fast cartoon + texture image filters, IEEE Transactions on Image Processing, Vol. 19, No. 8, pp. 1978-1986 (2010)).

The known texture/cartoon decomposition algorithms (W. Yin, D. Goldfarb, and S. Osher, Image cartoon-texture decomposition and feature selection using the total variation regularized L1 functional, in Variational, Geometric, and Level Set Methods in Computer Vision, Springer, pp. 73-84 (2005); A. Buades, T. Le, J.-M. Morel, and L. Vese, Fast cartoon + texture image filters, IEEE Transactions on Image Processing, Vol. 19, No. 8, pp. 1978-1986 (2010); J.-L. Starck, M. Elad, and D. Donoho, Image decomposition via the combination of sparse representations and a variational approach, IEEE Transactions on Image Processing, Vol. 14, No. 10, pp. 1570-1582 (2005); F. Zhang, X. Ye, and W. Liu, Image decomposition and texture segmentation via sparse representation, Signal Processing Letters, IEEE, Vol. 15, pp. 641-644 (2008); R. Shahidi and C. Moloney, Decorrelating the structure and texture components of a variational decomposition model, IEEE Transactions on Image Processing, Vol. 18, No. 2, pp. 299-309 (2009)) are based mostly on total variation (TV) minimising methods following the study of Y. Meyer (Y. Meyer, Oscillating Patterns in Image Processing and Nonlinear Evolution Equations: The Fifteenth Dean Jacqueline B. Lewis Memorial Lectures. Boston, MA, USA: American Mathematical Society (2001)). The TV-based regularization methods date back to the study of Tikhonov (A. N. Tikhonov and V. Y. Arsenin, Solutions of ill-posed problems, ser. Scripta series in mathematics. Washington: Winston (1977)). The TV formula most widely used in image processing was introduced for image segmentation by Mumford and Shah (D. Mumford and J. Shah, Optimal approximations by piecewise smooth functions and associated variational problems, Communications on Pure and Applied Mathematics, Vol. 42, No. 5, pp. 577-685 (1989)), and later by Rudin et al. for noise filtering (L. I. Rudin, S. Osher, and E. Fatemi, Nonlinear total variation based noise removal algorithms, Phys. D, Vol. 60, pp. 259-268 (1992)), by optimising the following cost function:

$$\inf \left\{ E_{TV}(u) = \int_\Omega |Du| + \lambda \int_\Omega v^2 \right\}$$

where u is the geometrical (cartoon) component, i.e. the cartoon image of the original image (f), v = f - u is the texture image, i.e. the texture image is obtained by subtracting the cartoon image from the image serving as a basis of the method. Consequently, the cost function consists of two parts: the first part is the total variation of the cartoon image, and the second part is the integral of the square of the texture image taken into consideration by weighting with a regularization parameter $\lambda$. The first, total variation member is responsible for making sure that the cartoon image is sufficiently smooth, and that after optimising the cost function, it does not contain oscillating parts. The oscillating parts greatly contribute to the total variation, and therefore the texture elements remaining in the cartoon image increase the first part compared to the total variation obtainable for an ideal cartoon image. The integrand ($|Du|$) of the first member gives quantities proportional to the absolute value of changes observable in each point are obtained, and when these are integrated over a given range by way of example over an image, the total variation of the range i.e. that of the image is obtained. By altering parameter $\lambda$, of the second member, it can be weighted whether the optimising of the cartoon image or the texture image should dominate.

Meyer uses a different cost function in the second, texture component (Y. Meyer, Oscillating Patterns in Image Processing and Nonlinear Evolution Equations: The Fifteenth Dean Jacqueline B. Lewis Memorial Lectures. Boston, MA, USA: American Mathematical Society, 2001):

$$\inf \int_{\Omega} |Du| + \lambda \|v\|_*$$

where $\|.\|_*$ is suitably defined on a Banach G space as follows

$$\|v\|_* = \inf_{g1,g2} \left\| \sqrt{g_1^2(x,y) + g_2^2(x,y)} \right\|_{L^\infty}$$

for all $g_1$ and $g_2$ such that $v = div(\bar{g})$ and $\bar{g} = (g_1, g_2)$.

Beyond the regularization method, other techniques are used for cartoon/texture decomposition, or for enhancing the quality of decomposition. In a study (F. Zhang, X. Ye, and W. Liu, Image decomposition and texture segmentation via sparse representation, Signal Processing Letters, IEEE, Vol. 15, pp. 641-644 (2008)) an image decomposition and texture segmentation method is disclosed. In the method (DOSV) described in another study (R. Shahidi and C. Moloney, Decorrelating the structure and texture components of a variational decomposition model, IEEE Transactions on Image Processing, Vol. 18, No. 2, pp. 299-309 (2009)) the optimal value of the regularization parameter $\lambda$ is searched for, based on the observation of Aujol about the independence of cartoon/texture (J.-F. Aujol and G. Gilboa, Constrained and snr-based solutions for tv-hilbert space image denoising, J. Math. Imaging Vis., Vol. 26, pp. 217-237 (2006)).

A cartoon/texture decomposition method applying non-linear filtering and based on the above cost functions is described in a paper by A. Buades, T. Le, J.-M. Morel, and L. Vese, Fast cartoon + texture image filters, IEEE Transactions on Image Processing, Vol. 19, No. 8, pp. 1978-1986 (2010). Herebelow, the method described in this paper will be referenced as BLMV method. Anisotropic diffusion is applied in edge detection and other image processing algorithms in the following studies: P. Perona and J. Malik, Scale-space and edge detection using anisotropic diffusion, IEEE Transactions on Pattern Analysis and Machine Intelligence, Vol. 12, pp. 629-639 (1990); G. Sapiro and D. Ringach, Anisotropic diffusion of multivalued images with applications to colour filtering, IEEE Transactions on Image Processing, Vol. 5, No. 11, pp. 1582 -1586 (1996) and J. Weickert, Anisotropic Diffusion in Image Processing. Stuttgart, Germany: Teubner-Verlag, 1998. The image processing application of the measure of independence appears in the following studies: J.-F. Aujol and G. Gilboa, Constrained and snr-based solutions for tv-hilbert space image denoising, J. Math. Imaging Vis., Vol. 26, pp. 217-237 (2006); L. Kovacs and T. Sziranyi, Focus area extraction by blind deconvolution for defining regions of interest, IEEE Tr. Pattern Analysis and Machine Intelligence, Vol. 29, No. 6, pp. 1080-1085 (2007) and D. Szolgay and T. Sziranyi, Optimal stopping condition for iterative image deconvolution by new orthogonality criterion, Electronics Letters, Vol. 47, No. 7, pp. 442-444 (2011). In the paper of J.-F. Aujol and G. Gilboa, the ADE measure is applied for noise filtering purposes. In the case of noise filtering, it can be assumed that the noise parameters are the same for the whole image and at the same time in the case of the decomposition method, the parameters of the texture to be removed, i.e. the component corresponding to the noise, may be and generally are different in various parts of the image.

In the BLMV method, a position-dependent so-called local total variation (LTV) is calculated on image f before and after filtering the image with a low-pass filter characterised by $L_\sigma$ $\sigma$, as featured also in the paper by Y. Meyer, Oscillating Patterns in Image Processing and Nonlinear Evolution Equations: The Fifteenth Dean Jacqueline B. Lewis Memorial Lectures. Boston, MA, USA: American Mathematical Society, 2001. The relative difference of LTVs obtained before and after filtering determines whether a given pixel is part of the texture or the cartoon, because the LTV of oscillating parts characterising the texture quickly changes, while the LTV of cartoon parts is practically identical before and after the filtering, in spite of the fact that as a result of filtering, the cartoon parts may become blurred. By using the LTV values, a cartoon image u can be created as follows: if the relative difference of LTVs is higher than a given threshold value for one pixel r, then u(r) will be equal to $(L_\sigma * f)(r)$ obtained by the low-pass filter in the given pixel position r, and if the relative difference of LTVs does not reach the threshold value for a given pixel r, then u(r) = f(r), i.e. a given pixel of the cartoon image is identical with the given pixel of the original image. Selecting appropriately the filtering parameter, i.e. σ, plays a key role in obtaining the best possible result. It is a disadvantage of the BLMV method that it may happen: there is no such σ value which allows the removal of all texture type details from the cartoon image when applied in filtering as described above, in addition to permitting the preserving of all non-texture type components in the whole image.

In the known image processing methods, the application of so-called diffusion algorithms also emerges. The purpose of such algorithms based on partial differential equations is generally the removal of noise from an image. The diffusion algorithms may be isotropic or anisotropic. Isotropic diffusion can be described by the following equation:

$$\frac{\partial f(x,y,t)}{\partial t} = \nabla^2 \cdot f$$

where $f(x,y,t): \mathbb{R}^2 \rightarrow \mathbb{R}^+$ is the image in the continuous domain with spatial coordinates (x, y), t is an artificial time parameter, $\nabla f$ is the gradient of the image. f(x, y, 0) is the original image. This diffusion algorithm is equivalent to using a Gaussian filter on the image, which blurs not only the noise or texture components, but the main edges also. When isotropic diffusion is applied on an image, the intensity of a pixel will be equal practically with the average of surrounding pixels, as a result of using the diffusion.

Gabor (D. Gabor, Information theory in electron microscopy, Laboratory Investigation, Vol. 14/6, pp. 801-807 (1965)), and then later Perona and Malik (P. Perona and J. Malik, Scale-space and edge detection using anisotropic diffusion, IEEE Transactions on Pattern Analysis and Machine Intelligence, Vol. 12, pp. 629-639 (1990)) recommended the use of anisotropic diffusion in image processing, which, in accordance with the scalespace theory (L. Florack, Image Structure, Kluwer Academic Publishers, 1997; or L. Alvarez, P.-L. Lions, and J.-M. Morel, Image selective smoothing and edge detection by nonlinear diffusion. II, SIAM J. Numer. Anal., Vol. 29, pp. 845-866 (1992)), allows diffusion along the edges or in edge-free regions, but prevents the diffusion, i.e. practically the blurring of the image caused by averaging, orthogonally to the edge direction. The application of anisotropic diffusion corresponds to not using simple averaging for determining the intensity of a given pixel contrary to isotropic diffusion, but such a weighted average, where a direction intersecting the edge plays a smaller role. As a result, in a direction normal to the edge, anisotropic diffusion will slightly blur the image, thereby preserving the edges. The equation of anisotropic diffusion is modified as follows compared to the equation describing the isotropic diffusion:

$$\frac{\partial f(x,y,t)}{\partial t} = \nabla \cdot \left( g\left( \|\nabla f\| \right) \nabla f \right)$$,

in this formula, $\|\nabla f\|$ is the magnitude of the gradient of function f, and g(.) is the weighting function that controls diffusion with respect to the edges. Accordingly, the weight function g(.) practically specifies which weights are featured in each direction in the averaging of diffusion in each point of the picture. The discretised form of the equation describing anisotropic diffusion is:

$$f(x,y,t+1) = f(x,y,t) + \frac{\lambda}{|\eta(x,y)|} \cdot \sum_{(x',y') \in \eta(x,y)} \nabla^{(x',y')} \left( g\left( \nabla^{(x',y')} u_\alpha(x,y) \right) \right) \nabla^{(x',y')} f(x,y,t)$$

where (x, y) is the position of the pixel, and t denotes discrete time steps (iterations). $\lambda \in \mathbb{R}^+$ is a constant determining the velocity of the diffusion, and $|\eta(x,y)|$ is the number of neighbouring pixels of the pixel in position (x, y). The following component of the equation

$$\nabla^{(x',y')} f(x,y,t) = f(x',y',t) - f(x,y,t)$$

provides an approximation of the image gradient in a given direction and $(x',y') \in \eta(x,y)$.

In image processing, anisotropic diffusion is generally applied for noise suppression of images. By the application of anisotropic diffusion, noise can be removed from images in a way that their main structure, i.e. edges, lines and other characteristic parts are left intact (I. Kopilovic and T. Sziranyi, Artifact reduction with diffusion pre-processing for image compression, Optical Engineering, Vol. 44, No. 2, Feb. 2005). However, the method proposed in the above mentioned paper of Perona and Malik is unsuitable in many cases for the cartoon/texture decomposition of images, because the texture components of an image used as a point of departure may contain very strong diffusion inhibiting edges. In such very frequent cases, a significant number of texture components may remain in the cartoon image, if anisotropic diffusion is applied for decomposing the image. To solve this problem, a study (N. Sprljan, M. Mrak, and E. Izquierdo, Image compression using a cartoon-texture decomposition technique, Proc. Int. Work. on Image Analysis for Multimedia Interactive Services (WIAMIS), p. 91 (2004)) suggests the use of the AD algorithm with weights changed as follows: in the discrete formula of anisotropic diffusion, the following expression is used instead of the expression $\|\nabla^{(x',y')} f(x,y,t)\|$:

$$\left\| \nabla^{(x',y')} \left( G_\sigma * f \right) (x', y', 0) - \left( G_\sigma * f \right) (x, y, 0) \right\|,$$

$$(x', y') \in \eta(x, y)$$

where $G_\sigma$ is a Gaussian filter of $\sigma$ bandwidth and * denotes convolution. Applying this expression is practically equal to using the edges of a Gaussian filtered image instead of the edges of the original image, as a means of preventing diffusion. It is a disadvantage of this approach that the quality of the result of decomposition method highly depends on the value of parameter $\sigma$ applied in the Gaussian filter; in the case of a small $\sigma$, some texture may remain in the cartoon, while in the case of a greater $\sigma$, some cartoon edges may disappear.

A method for image denoising is disclosed in A. Rajwade, A. Rangarajan and A. Banerjee, Automated filter parameter selection using measures of noiseness, in: Canadian Conference on Computer and Robot Vision, IEEE, Piscataway, NJ, USA, 31 May 2010, pp. 86-93. A method applying diffusion in image denoising is disclosed in P. Mrázek and M. Navara, Selection of optimal stopping time for nonlinear diffusion filtering, International Journal of Computer Vision, Vol. 52, No. 2-3, pp. 189-203 (2003).

In a study (L. Kovacs and T. Sziranyi, Focus area extraction by blind deconvolution for defining regions of interest, IEEE Tr. Pattern Analysis and Machine Intelligence, Vol. 29, No. 6, pp. 1080-1085 (2007)), the concept of so-called Angle Deviation Error (ADE) had been introduced, and in another study (D. Szolgay and T. Sziranyi, Optimal stopping condition for iterative image deconvolution by new orthogonality criterion, Electronics Letters, Vol. 47, No. 7, pp. 442-444 (2011)), the inventors of this application used it for the automatic determination of the stopping condition in iterative non-regularized deconvolution methods; the purpose of the method according to the study is to find the iteration step, in which the estimated image and the change of the estimated image differ as much as possible. The formula serving as a basis for the ADE method is slightly similar to the correlation formula (J.-F. Aujol and G. Gilboa, Constrained and snr-based solutions for tv-hilbert space image denoising, J. Math. Imaging Vis., Vol. 26, pp. 217-237 (2006)) the measure of orthogonality of basically two image partitions, e.g. obtained by partitioning to clear image and noise:

$$ADE(Q, P) = \left| \arcsin \left( \frac{\langle Q, P \rangle}{|Q| \cdot |P|} \right) \right|,$$

where $Q, P \in \mathbb{R}^n$ are the images tested by the so-called ADE measure, and $\langle Q, P \rangle$ is their scalar product. The scalar product of two images is the scalar product of vectors generated from the values of image pixels by continuous column or line transcript.

In view of known solutions, the need has arisen for a method which decomposes an arbitrary image with high efficiency to its cartoon and texture components.

## DESCRIPTION OF THE INVENTION

The primary object of the invention is to provide a method, which is free of the disadvantages of prior art solutions to the greatest possible extent.

A further object of the invention is to provide a method by which an arbitrary image can be decomposed into a cartoon and texture image as efficiently as possible by the fullest possible separation of cartoon and texture components.

A further object of the invention is to provide an image decomposition method which is locally adaptive, i.e. sensitive to the different cartoon and texture characteristics of various parts of the image serving as a basis.

The invention is a method for decomposing an image consisting of pixels to cartoon and/or texture image, in the course of which the image is filtered with a low-pass filter. According to the invention, a plurality of intermediate cartoon images are produced by filtering the image with the low-pass filter while changing the value of a filtering parameter of the low-pass filter within a range, intermediate texture images are derived by subtracting the intermediate cartoon images from the image, the intermediate cartoon images and the intermediate texture images are divided into cells, a larger block being centered around the cell is assigned to each cell on the intermediate cartoon images and on the intermediate texture images, and determining, for each value of the filtering parameter and for the block assigned to each cell, by getting the cells one by one, an Angle Deviation Error measure, on the basis of the parts of the intermediate cartoon image and the intermediate texture image falling into that block, determining a filtering parameter image, which is divided into cells corresponding to the division of the intermediate cartoon images and the intermediate texture images, by selecting a filtering parameter value for pixels of each of the cells of the filtering parameter image for which the Angle Deviation Error measure, determined for the block assigned to the corresponding cell of the intermediate cartoon images and the intermediate texture image, is minimal, and pixels of the cartoon image and/or the texture image are determined for each of the cells by selecting for the pixels of the cell corresponding pixels of the intermediate cartoon image and/or intermediate texture image produced with the filtering parameter values selected for the pixels of the corresponding cell of the parameter image.

Therefore, with the method according to the invention, the value of filtering parameter can be determined for each cell separately, i.e. in a locally adaptive manner, taking into consideration at least the cell contents or preferably its narrower or broader environment. Locally adaptive determination means that due to the applied relatively small cells, defining the filtering parameter for each cell, the applied filtering is able to accommodate itself to the locally appearing characteristics of the image. Accordingly, for each part of the image serving as a basis of the decomposition method, a filtering parameter better matched to the cartoon and texture content of given parts, having a value more suitable for separating them can be chosen. The Angle Deviation Error measure gets its minimal value as a function of the value of filtering parameter, when the cartoon image and the texture image are most independent, i.e. approximating most closely an ideal cartoon image and texture image.

In one embodiment of the method according to the invention, after the determination of the cartoon image, a further step of anisotropic diffusion is performed on the cartoon image so that edge constraints of the anisotropic diffusion are initiated with the cartoon image, and the cartoon image is overwritten by the image obtained through the anisotropic diffusion. Therefore, in this embodiment of the method, anisotropic diffusion is applied to the image after decomposing it to cartoon and texture images. In the present embodiment of the method, the anisotropic diffusion is not used on its own for decomposing the image, because the edges of the anisotropic diffusion, i.e. the constraints of the diffusion are determined by the cartoon image already filtered in a locally adaptive manner. Thanks to this, through the application of anisotropic diffusion, further strengthening of the edges and further weakening of textural characteristics can be achieved on the cartoon image, and therefore in the present embodiment, the cartoon image and from this the texture image can be determined with an even higher efficiency.

In one embodiment of the method according to the invention, the texture image is preferably determined also after the determination of the cartoon image obtained through the anisotropic diffusion.

In a further embodiment of the method according to the invention, the anisotropic diffusion is performed iteratively so that Angle Deviation Error measures are determined for each of the blocks, after a given number of consecutive iterations, on the basis of the parts of the intermediate cartoon image and the intermediate texture image falling into the block, and the iteration of the anisotropic diffusion is stopped for each cell when the Angle Deviation Error measure determined for the block assigned to the cell is minimal. In the embodiments of the method according to the invention comprising the execution of anisotropic diffusion, the anisotropic diffusion can even be performed in a single step, but preferably it is performed iteratively. For stopping the iteration process, preferably the same from Angle Deviation Error measure is used, by which the filtering parameter values have been determined for each cell. By the application of the anisotropic diffusion, the Angle Deviation Error measure is minimised for the blocks assigned to each cell, preferably the values of Angle Deviation Error measures obtained for each block decrease further compared to the values obtained earlier, i.e. the compilation of the cartoon image and/or texture image can be carried out with an even higher efficiency.

In an exemplary method, the parameter image is subjected to smoothing after its determination, and the smoothed parameter image is used for determining the cartoon image and/or the texture image. By smoothing the parameter image, a perceptible jump of the value of filtering parameter can be preferably avoided at the boundary of such cells to which different filtering parameter values have been assigned. Calculating the Angle Deviation Error measure not for cells but for blocks larger than the cells, the smoothness of the parameter image is provided for already to a certain extent, but with a further smoothing of the parameter image, the cartoon and texture images can be produced even more efficiently, because theoretically it can happen that the filtering parameter values obtained for two neighbouring cells are very much different. By the application of smoothing, a finer transition between these cells can be ensured. The intermediate cartoon images and texture images are calculated for a discrete number of filtering parameters only with the low-pass filter, and the filtering parameter of the other calculated intermediate images changes in discrete, preferably uniform, steps. In smoothing, preferably these calculated discrete values are taken into consideration only, because in this way a pixel associated with a filtering parameter calculated earlier can be assigned to a pixel after smoothing.

In an embodiment of the method according to the invention, the Angle Deviation Error measures are determined by a texture image transformed to zero mean. Therefore, resulting from the zero mean character of the texture image, if the offset of the texture image is corrected, an even more accurate determination of the texture image and/or cartoon image becomes possible.

In one embodiment of the method according to the invention, the cells and the blocks assigned to them have identical shapes. If the cells and the assigned blocks have an identical shape and their centres are the same i.e. are aligned, then the blocks which are larger than the cells, extend to environment of the cell of identical measure in all directions.

In a further exemplary method, the cells and the blocks are of a square shape, and side length of the blocks is at least four times as long as side length of the cells. The side length of the blocks is preferably at least four times as long as the side length of the cells, i.e. preferably the Angle Deviation Error measure is calculated for blocks much larger than cells, and therefore the value of the filtering parameter for a given cell can be determined in view of the appropriately large environment of the cell.

In a certain exemplary method, the size of cells is preferably up to 1/50 part of the size of the image, and the size of blocks is preferably at least three to six times as large as the size of cells, the side length of cells is especially preferably 5 pixels, and the side length of blocks is especially preferably 21 pixels. Therefore, in an embodiment of the method according to the invention, in comparison with the size of the image, a very small cell and a block much larger than the cell, but much smaller than the image size is applied.

BRIEF DESCRIPTION OF DRAWINGS

Preferred embodiments of the invention are described below by way of example with reference to the following drawings, where

Fig. 1 is an image examined by decomposition methods,
Fig. 2A is a cartoon image of a detail of Fig. 1, obtained by a prior art decomposition,
Fig. 2B is a texture image of a detail of Fig. 1, obtained by a prior art decomposition,
Fig. 3A is a cartoon image of a detail of Fig. 1, obtained by a further prior art decomposition,
Fig. 3B is a texture image of a detail of Fig. 1, obtained by a further prior art decomposition,
Fig. 4A is a cartoon image of Fig. 1 obtained by a yet further prior art decomposition,
Fig. 4B is a texture image of Fig. 1 obtained by a yet further prior art decomposition,
Fig. 5 is a parameter image of Fig. 1 obtained by a prior art method,
Fig. 6 is a cartoon image and texture image of Fig. 1 obtained by an embodiment of the decomposition method according to the invention,
Figs. 7A to 7D depict cartoon images and texture images obtained by an embodiment of the decomposition method according to the invention, with different iteration numbers,
Fig. 8 is the decomposition of a detail of Fig. 1 by various known methods and methods according to the invention,
Fig. 9A is an image examined by decomposition methods,
Fig. 9B is the decomposition of Fig. 9A by various known methods and methods according to the invention,
Fig. 10A is an image examined by decomposition methods,
Fig. 10B is the decomposition of a detail of Fig. 10A by various known methods and methods according to the invention,
Fig. 11A is an image examined by decomposition methods,
Fig. 11B is the decomposition of Fig. 11A by various known methods and methods according to the invention,
Fig. 12A is an image examined by decomposition methods,
Fig. 12B is the decomposition of Fig. 12A by various known methods and methods according to the invention,
Fig. 13 shows images examined by decomposition methods and their various decompositions obtained by known methods and methods according to the invention,
Fig. 14 is a flow diagram illustrating an embodiment of the method according to the invention, and
Fig. 15 is a flow diagram illustrating a further embodiment of the method according to the invention.

MODES FOR CARRYING OUT THE INVENTION

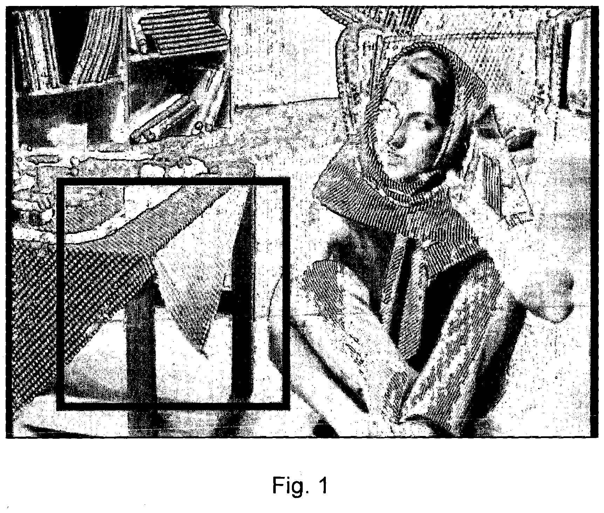

In the case of a given image, when the cartoon image and/or texture image obtained by a decomposition method according to the invention are compared by visual and numerical evaluation methods with the cartoon image or texture image obtained by prior art method for the image, it is found that the method according to the invention is able to decompose an image more efficiently into geometrical and textural components. We shall illustrate below the cartoon images and texture images obtainable by the method according to the invention, in comparison with the cartoon images and texture images obtainable by known methods. In some of the cases below, the image shown in Fig. 1 and its framed part, respectively, are examined by various methods.

In the BLMV method described above, a low-pass filter characterised by the same filtering parameter σ is applied for the whole image, in spite of the fact that nothing guarantees the existence of such σ with which the low-pass filter removes all texture parts from the image, without blurring the edges of the cartoon.

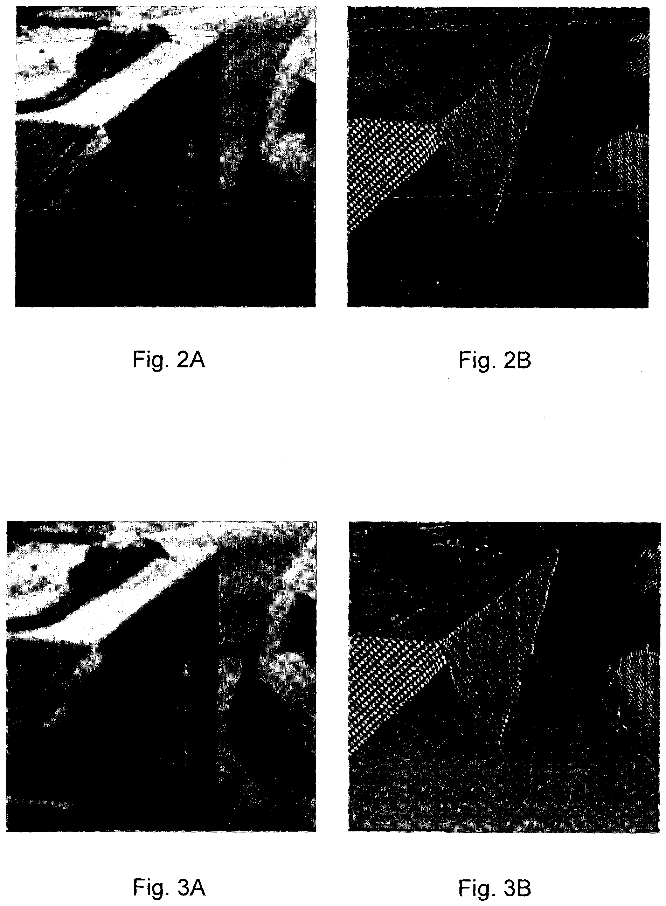

Figs. 2A and 2B show the cartoon and texture images obtained from the framed part of Fig. 1 by the known BLMV method, using a filtering parameter value of σ=3. Figs. 3A and 3B show the cartoon and texture images of the same detail, obtained by the BLMV method, using a filtering parameter value of σ=4. It is striking that using the prior art method, the texture of the tablecloth does not disappear completely in the cartoon image of Fig. 2A corresponding to parameter value of σ=3, while in the cartoon image of Fig. 3A, the edges of the objects on the table become blurred when using a higher σ. Therefore, the comparison of Figs. 2A and 3A demonstrates that in the exemplary image, the value of σ cannot be selected in the known BLMV method so that the cartoons and textures of various details of the image are appropriately divided between the cartoon image and the texture image, i.e. that with a good approximation only the cartoons of the image should appear in the cartoon image, and only the texture of the image in the texture image.

In the case of other images, it may also happen, for instance, that in the foreground of the image the texture size is larger than that of the cartoon in the background. In this case, a larger σ filtering parameter would be required in the foreground than in the background. Such an adaptivity is not offered by the prior art BLMV filter.

In the method according to the invention, contrary to the BLMV method, the value of filtering parameter is determined adaptively, i.e. in the method according to the invention filters with various σ filtering parameters are used in various parts of the image, in small units of it, in the so-called cells. A filter having the appropriate filtering parameter is selected in each cell on the basis of the independence of the texture removed from the image and the remaining cartoon parts. The degree of independence is determined by a so-called measure of independence, for a given cell concerning the block around it. The block includes and is larger than the cell. As a measure of independence, the ADE measure described above is applied. By the outermost cells, the outermost blocks are assigned similarly to the neighbouring blocks, but since the outermost blocks characteristically extend beyond the image, only the finite intensity value pixels thereof are taken into consideration when calculating the measure of independence.

Implementation of the locally adaptive filter is performed according to the invention as follows. By using a low-pass filter with various σ filtering parameters, cartoon images are produced. The value of filtering parameter σ is selected from the range $\sigma \in [s_1, s_2]$ between the two extreme values of the range, increasing by way of example the value of filtering parameter in equal steps. Let $u_{\sigma i}$ and $v_{\sigma i}$ be intermediate cartoon and intermediate texture images obtained for image f with a low-pass filter of filtering parameter $\sigma_i$. The input image is divided into nonoverlapping, small, for example 5 pixel by 5 pixel cells, and a block including a cell and being of size larger than the cell, e.g. 21 by 21, is assigned to preferably in a way that the centre of the cell and the centre of the block associated therewith are aligned. Then getting the cells one by one and for the block associated with each cell an ADE measure of independence is determined for the intermediate cartoon image $u_{\sigma i}$ and the intermediate texture image $v_{\sigma i}$ by using the ADE function of the following formula:

$$ADE(u_{\sigma_i}^{(x,y)}, v_{\sigma_i}^{(x,y)}) = \left| \arcsin \left( \frac{\langle u_{\sigma_i}^b(x,y) v_{\sigma_i}^b(x,y) \rangle}{|u_{\sigma_i}^b(x,y)| \cdot |v_{\sigma_i}^b(x,y)|} \right) \right|.$$

In the formula, index b runs through the blocks and implies that only the parts of the images $u_{\sigma i}$ and $v_{\sigma i}$ falling into the given block are used. The measure of independence of each block is calculated on the basis of the ADE function with the formula. In the formula, $\langle ... \rangle$ denotes the scalar product of the intermediate cartoon image and intermediate texture image blocks, which is normalised in the argument of the arc sin function, with the product of the absolute value of the appropriate intermediate cartoon image and intermediate texture image blocks. The quality criterion is based on the basic argument that the cartoon and texture parts of an image are orthogonal to each other. For generating the scalar product of the images, the images and the parts thereof are represented as vectors.

It is noted here that the texture component of the image, i.e. the texture image must have a zero mean value because of the method of its creation. However, due to smaller quantification errors, this is not always true in practice. To eliminate this, the mean value of the texture component of each block is preferably shifted to zero prior to determining the ADE, i.e. the ADE measure of independence is determined for each block by a texture image transformed to zero mean.

For each cell, several ADE values will be associated, because low-pass filtering is carried out with filtering parameter σ having several different values, creating several different intermediate cartoon images. After this, such a filtering parameter σ is assigned to each pixel, which parameter has given the lowest ADE value for the cell comprising the pixel. A filtering parameter image is created by filtering parameters σ assigned to each pixel. The parameter image is of the same size as the input image, and in its pixel position (x, y), the value of filtering parameter $\sigma$ associated with this position is located. In the output cartoon image, value $u_a$(x, y) of its pixel (x, y) is given by the following equation:

$$u_a(x,y) = u_{\sigma_m^{(x,y)}}(x,y),$$

where

$$\sigma_m^{(x,y)} = \arg\min_{\sigma_i \in [s_1; s_2]} \left( ADE\left( u_{\sigma_i}^b(x,y), v_{\sigma_i}^b(x,y) \right) \right).$$

The cell-based filtering parameter determination is advantageous also from the aspect of calculation need of the algorithm: instead of calculating the ADE value of the blocks locally, i.e. separately for each pixel, this have to be only done for the cells. To avoid formation of blocks in the output cartoon or texture image, preferably smoothing is applied to the parameter image, e.g. Gaussian smoothing. Preferably, a Gaussian function of d=2 pixel deviation is used in the smoothing, but the application of a Gaussian function with a different deviation may also be conceived. The Gaussian function can be described with the following formula:

$$G(x) = e^{-\left(\frac{(x-x_0)^2}{2d^2}\right)}$$

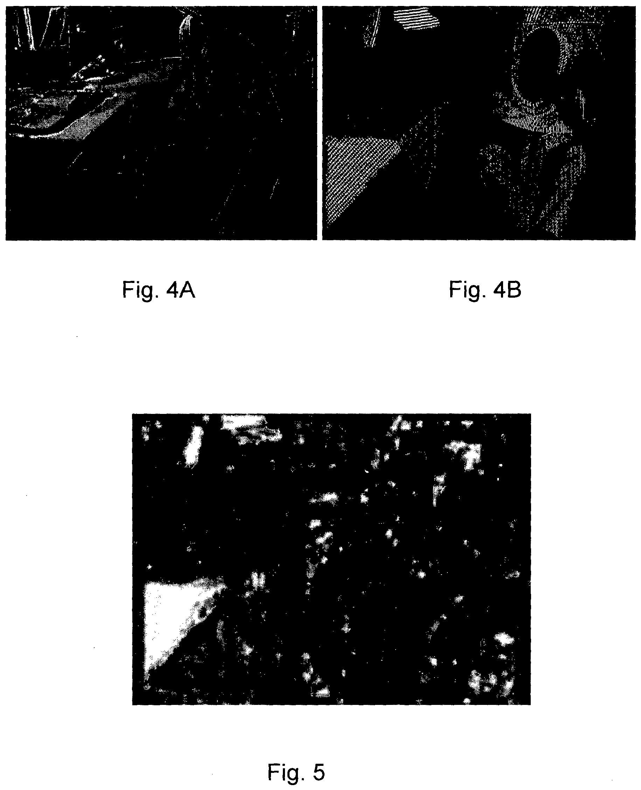

where $x_0$ is the centre of the Gaussian function and d is its deviation. Accordingly, in the case of the blurring of an image f, the smoothed value f'($x_o$) applicable in position $x_o$ can be obtained by adding value f(x) located in each position x of the image by weighting with value G(x) applicable there. Consequently, in the blurred image, the intensity of other pixels in its environment will make an influence on the intensity of the pixel measured in a given position. Figs. 4A and 4B show the output cartoon image and texture image obtained for Fig. 1 according to one embodiment of the method according to the invention, and the associated parameter image is shown in Fig. 5.

The method according to the invention i.e. which applies locally adaptive low-pass filtering clearly performs better than the BLMV method, as illustrated by the following examples. In an image, at the boundary of the texture and cartoon type of parts, the decomposition obtained by the embodiment of the invention detailed above can be improved preferably by using anisotropic diffusion. The application of anisotropic diffusion is especially advantageous, if after taking the inventive steps described above, texture parts remain in the cartoon image in a little measure or the boundaries of the cartoon are blurred. The application of an embodiment using anisotropic diffusion can be decided e.g. due to the character of the image. For initialising the anisotropic diffusion applied in certain embodiments of the invention, the cartoon image obtained with the above detailed embodiment is used, and by anisotropic diffusion performed preferably on an iterative basis, a new output cartoon and/or texture image is determined. In the embodiments where anisotropic diffusion is performed iteratively, an ADE measure of independence is determined for the blocks, and the iteration of anisotropic diffusion is stopped when the ADE measure of independence obtained for the blocks assigned to the cells is minimal.

The application of anisotropic diffusion can also be applied in one step, i.e. non-iteratively. The application of anisotropic diffusion, already after one step, makes a beneficial effect on the cartoon image and texture image, but anisotropic diffusion is preferably done iteratively, i.e. repeatedly until the stopping condition detailed above is met.

As it is known, the application of anisotropic diffusion preserves very strong edges, and blurs weak edges. In an arbitrary image, texture may comprise strong edges and the cartoon may comprise weak edges. As a result, the anisotropic diffusion detailed above and applied in the known way may blur weak cartoon edges, which are desired to be preserved, but it may keep texture edges intended to be blurred.

In the above mentioned paper of N. Sprljan, M. Mrak, and E. Izquierdo, Image compression using a cartoon-texture decomposition technique, Proc. Int. Work. on Image Analysis for Multimedia Interactive Services (WIAMIS), p. 91 (2004), the g diffusion weight function of the anisotropic diffusion is calculated in a Gaussian blurred version of the original image. According to one embodiment of the invention, we recommend to calculate the g diffusion weight function of the formula

$$f(x,y,t+1) = f(x,y,t) + \frac{\lambda}{|\eta(x,y)|} \cdot \sum_{(x',y') \in \eta(x,y)} \nabla^{(x',y')} \left( g\left( \nabla^{(x',y')} u_a(x,y) \right) \right) \nabla^{(x',y')} f(x,y,t)$$

on the cartoon image obtained prior to the application of the anisotropic diffusion. Accordingly, in accordance with the invention, in a more advantageous way than by prior art methods, a cartoon image obtained by the previous steps or a cartoon image derived from the obtained texture image - if only a texture image, and no cartoon image is determined in the previous steps - is used for determining the anisotropic diffusion weight function, instead of an image obtained by a filtering parameter covering the whole image.

The method according to the invention is performed in the embodiments applying anisotropic diffusion in such a way that by applying the steps of the method according to the invention to an image and by adaptively determining the filtering parameters as demonstrated above a cartoon image and/or a texture image is determined, and in the latter case a cartoon image is derived from it, and then a new cartoon image is defined by performing anisotropic diffusion in one step or iteratively in the cartoon image. If the anisotropic diffusion were applied - in the known way - for the input image, then all the edges, including the texture edges, would be protected during the application of the anisotropic diffusion. On the contrary, if anisotropic diffusion is applied according to the above embodiment of the invention for the cartoon image obtained in the steps preceding anisotropic diffusion, the texture edges of the initial image, which are no longer featured in this cartoon image, will not be protected and anisotropic diffusion is preferably able to blur them fully.

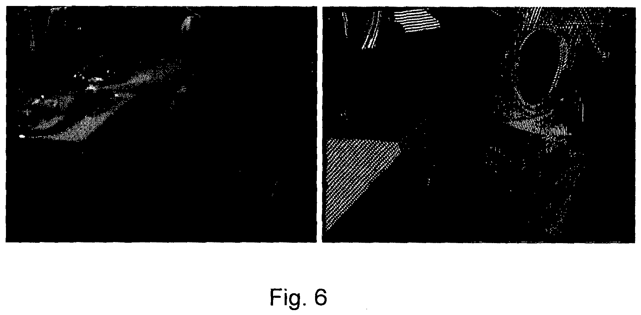

In the cartoon image obtained by steps preceding the application of anisotropic diffusion by the method according to the invention, the edges associated with the texture are already blurred, while the cartoon edges are mostly left intact. If diffusion parameter $\lambda$ of the formula above is chosen to be low for the anisotropic diffusion, the latter preserves the weak cartoon edges, but totally blurs those texture edges which are already partly blurred by the steps preceding anisotropic diffusion in the method according to the invention. The cartoon and texture images obtained by an embodiment of the method according to the invention comprising the execution of anisotropic diffusion are shown in Fig. 6.

In order to avoid over-smoothing of important edges of the cartoon image, the iteration of anisotropic diffusion is to be stopped in each cell at the appropriate moment, i.e. after an appropriate number of iteration steps. For determining the timing of the stopping, according to one embodiment of the invention, the independence of the cartoon and texture images and their various blocks is used, i.e. in a way similarly to that demonstrated above, after each iteration, the measure of independence is determined for each cell, on the basis of the blocks including the cells. We deviate from the above shown application of the measure of independence that in its application in the anisotropic diffusion, the number of anisotropic diffusion iterations is the parameter, according to which the minimum of the ADE measure is sought. The creation of cartoon image is described by the formula

$$u(x, y) = f(x, y, t_{ADE}),$$

where

$$t_{ADE} = \underset{i=1..I_{max}}{\arg \min}(ADE(f^b(x, y, i), v^b(x, y, i)))$$

In the formulae, $f(x, y, t_{ADE})$ is pixel $(x, y)$ of the image treated by diffusion after a $t_{ADE}$ number of iterations, $I_{max}$ is the highest number of iterations, $f^b(x, y, i)$ and $v^b(x, y, i) = f^b(x, y, 0) - f^b(x, y, i)$ is the cartoon and texture image of block $b$ comprising pixel $(x, y)$ after the $i$-th diffusion iteration, respectively. In the formula, the ADE value is calculated for each cell on the basis of the assigned block, and the optimal iteration number is determined adaptively, i.e. independently for each cell. Adding up the ADE values for all the cells, an iteration number characterising the whole image and providing a minimal ADE value can also be obtained. However, the ideal number of iterations is preferably determined separately, i.e. adaptively for each block. According to the demonstrated example, the measures of independence are calculated for each cell after an $I_{max}$ number of consecutive iterations, and then it is determined after which iteration was the ADE value minimal out of all the performed iterations for the block associated with the given cell, and this number of iterations is selected as a final iteration number for the given cell, i.e. the anisotropic diffusion is performed for this cell with such a number of iterations. In practice, this may take place in a way that the cartoon and texture images are stored after each iteration, and then by selecting the appropriate iteration numbers for the cells as described above, the final cartoon and/or texture image is obtained after compilation from the various cells.

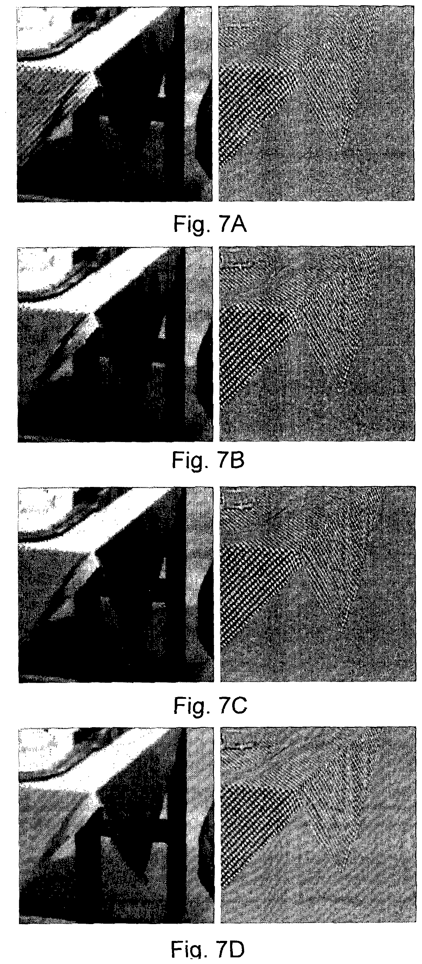

If anisotropic diffusion is not stopped adaptively in each cell by means of the ADE measure and a fixed iteration number is used or a single iteration is applied in the whole image, then the blurring of texture parts may eventually not be performed to an appropriate degree or certain parts of the cartoon image may be blurred, as shown in Figs. 7A to 7D. In Fig. 7A, the cartoon and the texture image can be seen after ten anisotropic diffusion iteration steps, in Fig. 7B after thirty iteration steps, in Fig. 7C after fifty iteration steps, and in Fig. 7D after one hundred iteration steps.

Evaluating the quality of cartoon/texture decomposition is generally carried out visually, because there is no generally accepted method for creating the so-called 'ground truth' in the case of real images. 'Ground truth' is an answer believed to be the perfect response to a task. In image processing, generally a human response is considered to be the 'ground truth' solution. When a given image is decomposed into texture and cartoon images, unfortunately it is not possible to ask people to pursue the task, because the two images generally may not be separated in the image space. What is more, in certain cases even for the observer it is difficult to tell whether a certain part of the image is texture or not.

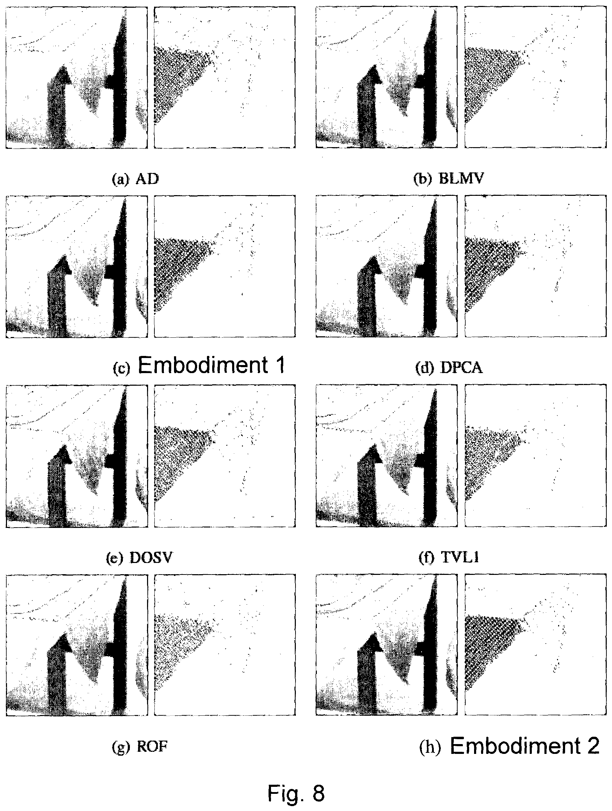

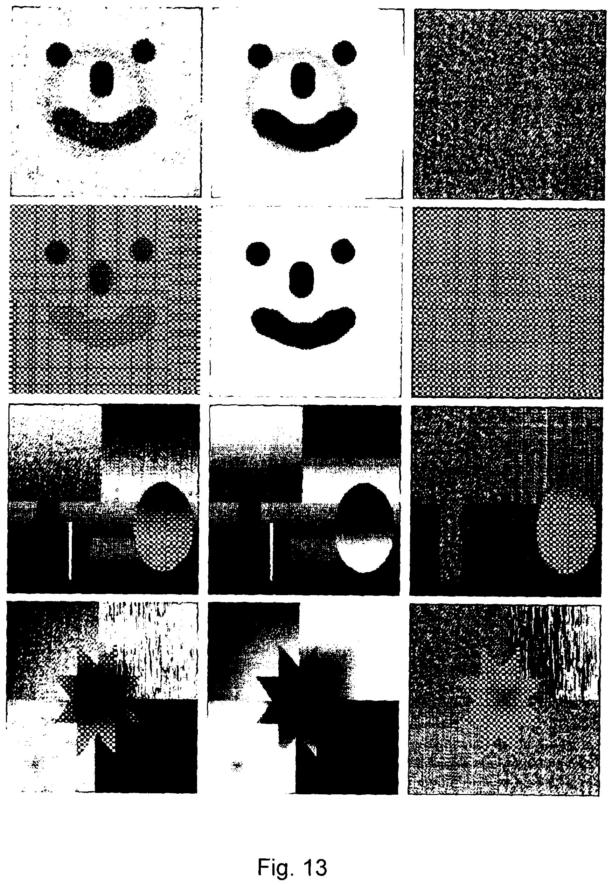

For the purpose of comparing the various known methods and certain embodiments of the method according to the invention, we shall present the decomposition (Figs. 8B to 12B) of the sample images (Fig. 1, Figs. 9A to 12A) in addition to the numerical evaluation of various methods by applying them to artificial images (Fig. 13), in which the cartoon and texture components of the 'ground truth' are available.

In the figures, the two preferred embodiments of the invention detailed above are compared with known decomposition methods. Of the two examined embodiments of the method according to the invention, the first is the embodiment (embodiment 1 in the figures) in which the method according to the invention is performed without the application of anisotropic diffusion, and in the other embodiment (embodiment 2) anisotropic diffusion stopped adaptively as demonstrated above is applied. These embodiments of the invention have been compared to the following known decomposition methods:

- BLMV method (A. Buades, T. Le, J.-M. Morel, and L. Vese, Fast cartoon + texture image filters, IEEE Transactions on Image Processing, Vol. 19, No. 8, pp. 1978-1986 (2010)),
- Anisotropic diffusion (AD) method (P. Perona and J. Malik, Scale-space and edge detection using anisotropic diffusion, IEEE Transactions on Pattern Analysis and Machine Intelligence, Vol. 12, pp. 629-639 (1990)), applied for the input image or the Gaussian filtered image non-adaptively,
- DPCA method (F. Zhang, X. Ye, and W. Liu, Image decomposition and texture segmentation via sparse representation, Signal Processing Letters, IEEE, Vol. 15, pp. 641-644 (2008)),
- DOSV method (R. Shahidi and C. Moloney, Decorrelating the structure and texture components of a variational decomposition model, IEEE Transactions on Image Processing, Vol. 18, No. 2, pp. 299-309 (2009)),
- ROF method (L. I. Rudin, S. Osher, and E. Fatemi, Nonlinear total variation based noise removal algorithms, Phys. D, Vol. 60, pp. 259-268 (1992)),
- TVL1 method (W. Yin, D. Goldfarb, and S. Osher, Image cartoon-texture decomposition and feature selection using the total variation regularized L1 functional, in Variational, Geometric, and Level Set Methods in Computer Vision, Springer, pp. 73-84 (2005)).

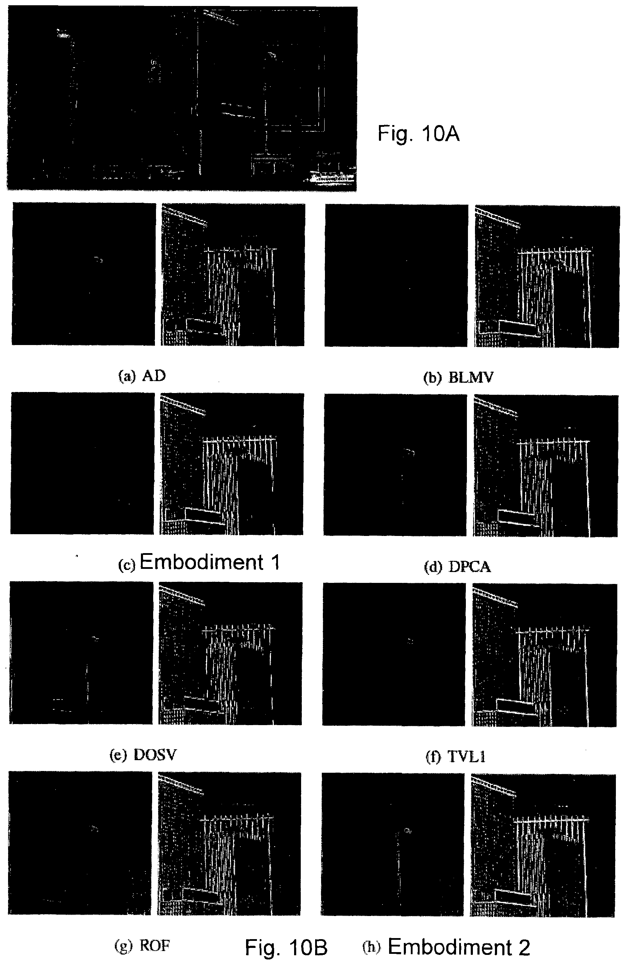

The programme codes of the known methods have been available to us, and in each case we have applied them with the best parameters, i.e. the best parameters of the known methods were determined by an extensive search. Accordingly, such parameters were used in the numerical evaluation, which gave the best numerical results, and in the case of subjective - visual - evaluation, such parameters were applied which yielded the best results visually. Except for the $\sigma$ range, in the case of the embodiments identified as embodiments 1 and 2 and applied in each image of the method according to the invention, the parameters have a constant value: the highest number of iterations is 100; the value of parameter $\lambda$ associated with anisotropic diffusion is 2 in the embodiment comprising anisotropic diffusion. It is noted that $\lambda = 2$ is a low value which makes anisotropic diffusion more sensitive to the constraints caused by the edges, and helps in the better preserving of cartoon edges. The lower and higher limits of the range of filtering parameter $\sigma$ in the case of most sample images are $s_1 = 0.2$ and $s_2 = 7$. The higher limit was $s_2 = 4$ only in the case of Fig. 10A, to make sure that the details of the cartoon are better preserved.

In choosing the filtering parameter range, the followings are preferably to be taken into consideration:

- the lower limit is generally close to zero, from which it is only worth deviating, if due to any reason it is intended to keep the finest textures in the cartoon image,
- in choosing the high limit, a compromise is to be struck, i.e. it is worth selecting the lowest value which ensures that all textures believed to be important are blurred by the algorithm (so that they surely appear in the texture image), but the edges of the cartoon are still in an acceptable condition.
- the broader the applied range, the longer the running time of the algorithm will be.

During visual evaluation, we have examined how strongly cartoon parts remained in the texture image, and texture parts in the cartoon image. Fig. 8, which is a decomposition of Fig. 1, shows that the five methods (AD, BLMV, TVL1, ROF, DOSV) are not able to eliminate the texture of the tablecloth, while in the texture image, certain cartoon edges remain visible. The DPCA method is able to eliminate the texture from the cartoon image, but this image becomes less smooth, and a slow change of grey colour appears in the texture image. The two embodiments of the method according to the invention shown in the figure eliminate the texture from the cartoon image, and practically no cartoon appears in the texture image. It can be seen that out of the two demonstrated embodiments, embodiment 2 performs slightly better than embodiment 1.

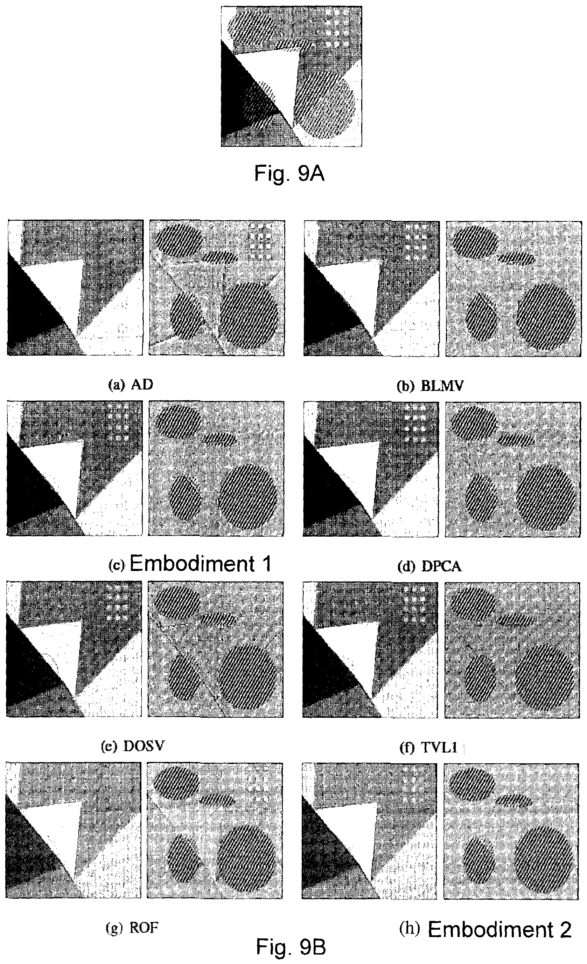

Regarding the image shown in Fig. 9A, each method eliminates the texture from the cartoon image, but each one at the same time transfers certain cartoon edges to the texture image, as shown in Fig. 9B. Here the methods are distinguished by how sharply the edges of the cartoon appear in the texture image, and how accurate the cartoon image is. It can be observed that the two demonstrated embodiments of the invention perform the best, the fewest cartoon parts remain in the texture image in the case of the two embodiments, and practically only very vague cartoon lines can be observed within the texture parts (embodiment 1), and in the background, paler than embodiment 1, within the texture parts (embodiment 2).

On the image shown in Fig. 10A, there are numerous edges favouring TV-based methods, especially ROF. However, some errors can be seen in the cartoon image obtained by ROF, like e.g. the rectangular cloud above the left hand side building or the blurring of the top of this building. The cartoon and texture images associated with Fig. 10A are depicted in Fig. 10B. Most of the known methods demonstrated blur some parts of the image, and almost none of the known methods is able to make the vertical line texture visible on the darkest building disappear. In these fields, the two demonstrated embodiments of the invention, especially embodiment 2, perform very well.

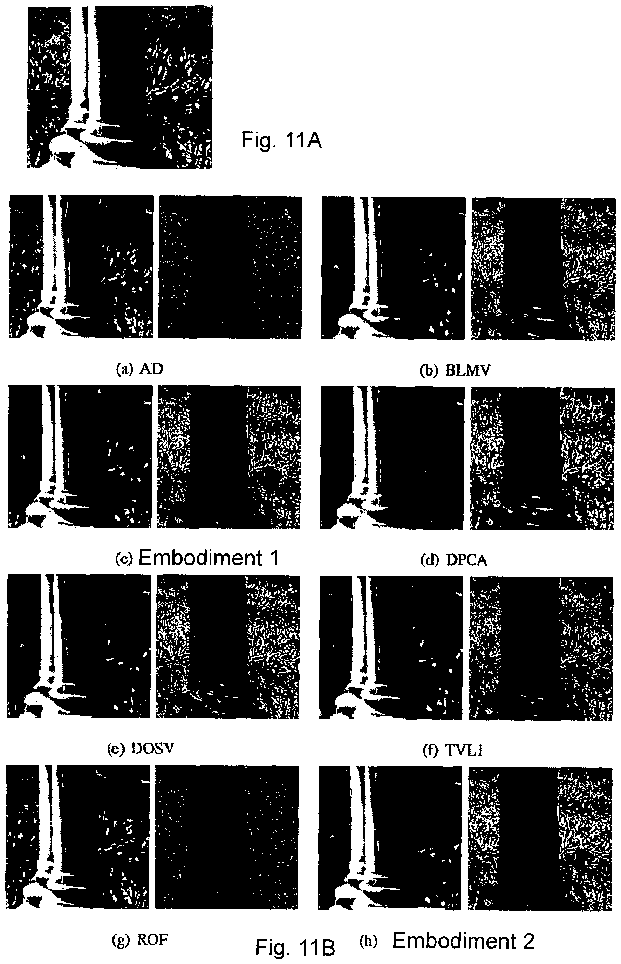

The question arising about the image shown in Fig. 11A is how well the columns remain visible in the cartoon image or how strong does the edge of columns appear in the texture image, and how blurred is the grass in the background. On the basis of the cartoon and texture images shown in Fig. 11B, it can be stated that BLMV, DOSV and TVL1 provide good results, but the two demonstrated embodiments of the invention perform even better. In addition, AD and ROF do quite badly: the texture slightly appears in the cartoon image, and the edges of the column are obviously present in the texture image. The DPCA method blurs the texture most similarly to the embodiments of the invention, but some sharp cartoon edges appear in the texture image obtained by this method.

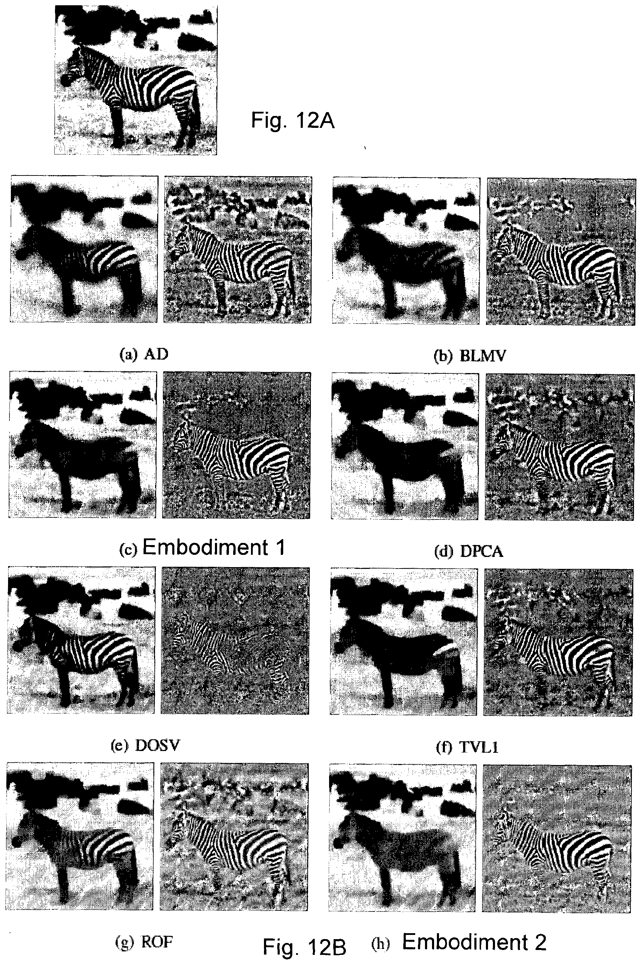

The zebra picture in Fig. 12A presents a great challenge, because the texture of the zebra varies within broad limits. In an ideal case, the zebra only appears with its outline in the cartoon image, and the complete striping as a texture is in the texture image. It can be seen in the cartoon and texture images of Fig. 12B that the AD and ROF methods perform poorly, because a large part of the texture remains in the cartoon image, while the non-texture type parts, like a slow variation of the grey background, appear in the texture image. The AD method is not suitable for this image, because the edges of the texture are stronger than some of the cartoon edges, and as a result by this method the cartoon edges disappear, and the texture edges remain in the cartoon image. The DOSV is not able to eliminate the larger texture parts without blurring the cartoon. The BLMV method blurs the cartoon even more, but makes most of the texture disappear, although not to such a degree as the embodiments of the invention. The TVL1 and DPCA methods perform similarly to the methods above, and they make most of the texture disappear, but a number of non-texture type of edges become visible also in the texture image. It can be seen that the embodiments of the invention, especially embodiment 2, perform well. In embodiment 2, the pattern of the zebra is appropriately transferred to the texture image, and the texture characteristics of the gnu herd grazing in the background also appear. The outlines with the characteristic basic colour are in the cartoon image. The decomposition obtained according to embodiment 1 also meets the requirements, less than in embodiment 2, but yet on a high level.

Numerical evaluation is a difficult task in the case of the cartoon/texture decomposition, because 'ground truth' is generally not available for the images. Accordingly, most of the related papers neglect such comparisons, and focus on subjective visual comparison. On the contrary, we have evaluated numerically such artificially generated images, for which the 'ground truth' is available. We have calculated the following coefficients for comparing the quality: the absolute difference of cartoon (ead(u)) and texture (ead(v)) edges, the absolute difference of cartoon image (ad(u)), and the correlation coefficient of the estimated texture image and the 'ground truth' texture image. These are defined according to the following:

$$ead(u) = |e(u') - e(u)|,$$

$$ead(v) = |e(v') - e(v)|,$$

$$ad(u) = |u' - u|,$$

$$corr(v', v) = \frac{cov(v', v)}{\sigma_{v'}\sigma_v},$$

where u and v are the 'ground truth' cartoon and texture images, u' and v' are the cartoon and texture images obtained by decomposition methods, and e(.) is the Prewitt edge image (J. M. S. Prewitt, Object Enhancement and Extraction, in: Picture Processing and Psychopictorics, B. S. Lipkin and A. Rosenfeld, eds., Academic Press, New York, 1970). In the expressions ead(u), ead(v) and ad(u), the lower values belong to the better results, while in the case of correlation coefficients, the higher values belong to the better results. According to the values of the following tables containing the results of Fig. 13, the method according to the invention and especially one of its embodiments performs better than any other method. Various artificial images are shown in the four lines of Fig. 13. The first column contains the original images, the middle column contains the cartoon images and the texture images are in right hand side column. Table 1 refers to the images shown in line 1 of Fig. 13, Table 2 to the images shown in line 2 of Fig. 13, Table 3 to the images shown in line 3 of Fig. 13 and Table 4 to the images shown in line 4 of Fig. 13, concerning the results applied for the images also shown above, and obtained with embodiments 1 and 2 and with the known methods.

Table 1

|  | ead(u) | ead(v) | ad(u) | corr(v', v) |
|---|---|---|---|---|
| AD | **0.4585** | **0.3870** | 3.7430 | 0.9460 |
| BLMV | 0.8105 | 0.6698 | 4.5584 | 0.9238 |
| Embodiment 1 | 0.7668 | 0.6333 | 4.3541 | 0.9298 |
| DPCA | 0.8322 | 0.6701 | 5.7892 | 0.8939 |
| DOSV | 0.5556 | 0.5130 | 3.7948 | 0.9422 |
| TVL1 | 0.9311 | 0.7802 | 7.9885 | 0.7893 |
| ROF | 0.6683 | 0.5237 | 4.6568 | 0.9367 |
| Embodiment 2 | 0.5075 | 0.4532 | **3.6115** | **0.9479** |

Table 2

|  | ead(u) | ead(v) | ad(u) | corr(v', v) |
|---|---|---|---|---|
| AD | 0.5631 | 0.5373 | 2.1536 | 0.9564 |
| BLMV | 0.8393 | 0.7611 | 2.6356 | 0.9263 |
| Embodiment 1 | 0.7922 | 0.7182 | 2.4525 | 0.9311 |
| DPCA | 0.7420 | 0.6596 | 2.8667 | 0.9361 |
| DOSV | 0.4137 | 0.3911 | 1.5184 | 0.9780 |
| TVL1 | 0.4339 | 0.3288 | 3.8850 | 0.8693 |
| ROF | 0.5926 | 0.4855 | 2.6941 | 0.9508 |
| Embodiment 2 | **0.2782** | **0.2408** | **1.0342** | **0.9862** |

Table 3

|  | ead(u) | ead(v) | ad(u) | corr(v', v) |
|---|---|---|---|---|
| AD | 0.3279 | 0.2386 | 1.7500 | 0.9678 |
| BLMV | 0.4363 | 0.3229 | 1.8498 | 0.9661 |
| Embodiment 1 | 0.3703 | 0.3037 | 1.5932 | 0.9811 |
| DPCA | 0.5535 | 0.4322 | 2.3272 | 0.9658 |
| DOSV | 0.3217 | 0.2788 | 1.6535 | 0.9826 |
| TVL1 | 0.5589 | 0.4391 | 2.2239 | 0.9681 |
| ROF | 0.5105 | 0.4064 | 2.3239 | 0.9658 |

(continued)

|  | ead(u) | ead(v) | ad(u) | corr(v', v) |
|---|---|---|---|---|
| Embodiment 2 | **0.2682** | **0.2385** | **1.2826** | **0.9876** |

Table 4

|  | ead(u) | ead(v) | ad(u) | corr(v', v) |
|---|---|---|---|---|
| AD | 0.4019 | 0.3268 | 1.6902 | 0.9949 |
| BLMV | 0.4479 | 0.3147 | 1.4710 | 0.9974 |
| Embodiment 1 | 0.3979 | 0.2805 | 1.4539 | 0.9974 |
| DPCA | 0.6842 | 0.5437 | 9.2985 | 0.9118 |
| DOSV | 0.3564 | 0.3090 | 1.2509 | 0.9984 |
| TVL1 | 0.6917 | 0.4942 | 29.2620 | 0.7246 |
| ROF | 0.2829 | 0.2846 | 2.3199 | 0.9926 |
| Embodiment 2 | **0.1610** | **0.1304** | **1.2245** | **0.9985** |

It can be read out from the values of Table 1 that the AD method performs similarly for the image shown in the first line of Fig. 13 as embodiment 2, which is follows from the characteristics of the examined image, and decomposing the examined image into cartoon and texture components can be appropriately solved by the AD method. It is shown by the data of Table 2 that concerning the image shown in the second line of Fig. 13, it is unambiguously embodiment 2 which performs the best out of the examined methods, because considering all examined characteristics it gives the best value. This can also be concluded from the data of Tables 3 and 4.

In summary, it can be determined on the basis of visual and numerical tests that the method according to the invention, especially its embodiment 2 performs better than the known methods. The conclusion can also be drawn that the method according to the invention is not sensitive to the character of the image either, because it has given outstandingly good results in the case of a number of various image types and characters. It can be stated that the method according to the invention is universal, because according to experience, although for some type of images some of the known methods perform satisfactorily, the method according the invention, especially its embodiment 2 gives better results than any known methods. In the case of artificially created images, embodiment 1 yields a weaker result than embodiment 2, but in the decomposing of Fig. 1 and Figs. 9A to 12A into cartoon image and texture image, it performs better in a number of cases than prior art methods.

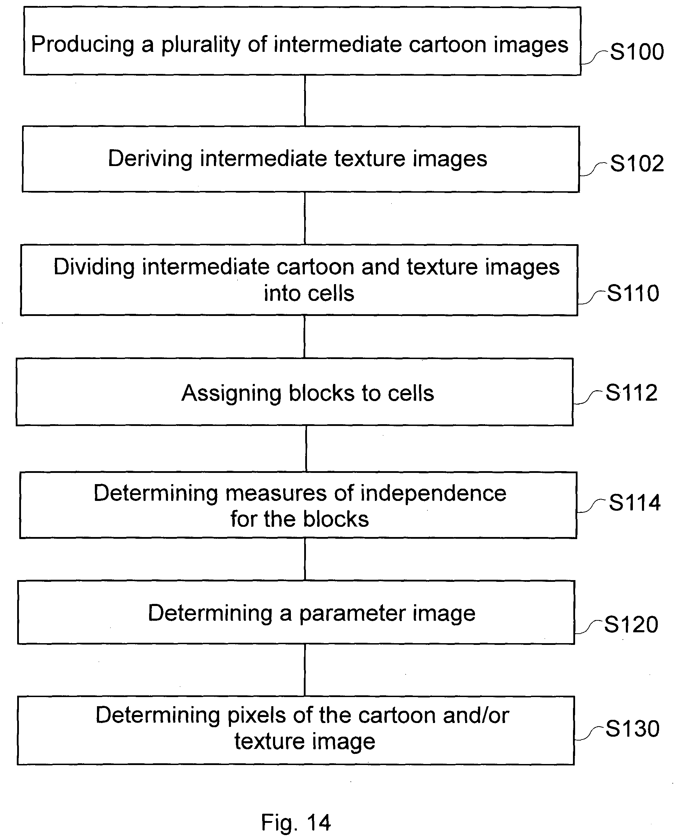

Fig. 14 is a flow diagram which illustrates the embodiment called above as embodiment 1. In the course of executing embodiment 1 of the method according to the invention, the image is filtered by a low-pass filter in a way that, in operational step S100, the image is filtered with the low-pass filter while the value of filtering parameter of the low-pass filter is changed within a range, and a plurality of intermediate cartoon images are produced, which are then subtracted from the image, and hence intermediate texture images are derived in operational step S102. Then in operational step S110, the intermediate cartoon images and intermediate texture images are divided into cells, in operational step S112 blocks including the cells are assigned to each of the cells on said intermediate images, in operational step S114 Angle Deviation Error measures are determined for each of the blocks on the basis of the intermediate cartoon images and the intermediate texture images associated with each value of the filtering parameter, in operational step S120 a filtering parameter image divided into cells corresponding to the division of the intermediate cartoon images and the intermediate texture images is determined so that those filtering parameter values are chosen for pixels of each of the cells of the parameter image for which the Angle Deviation Error measure determined for the block assigned to the cell is minimal, and in operational step S130 pixels of the cartoon image and/or the texture image are determined for each of the cells by selecting for the pixels of the cell corresponding pixels of the intermediate image produced with the filtering parameter values selected for the pixels of the corresponding cell of the parameter image.

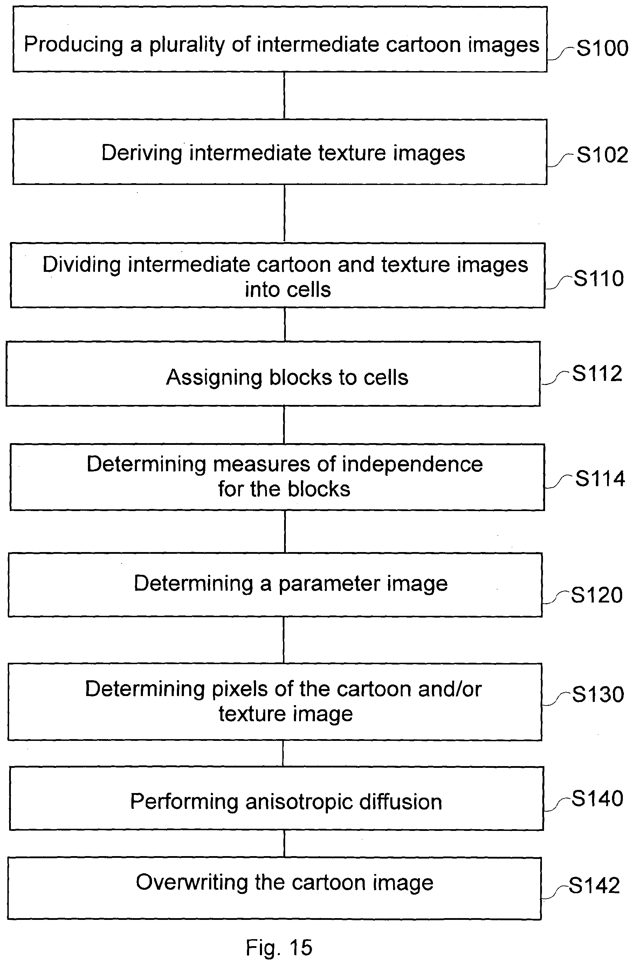

Fig. 15 is a flow diagram illustrating the embodiment called embodiment 2 above. In embodiment 2, the steps corresponding to embodiment 1 above are performed, i.e. after the determination of the cartoon image, in operational step S140, anisotropic diffusion is performed on the cartoon image so that edge constraints of the anisotropic diffusion are initiated with the cartoon image, and in operational step S142 the cartoon image is overwritten by the image obtained through the anisotropic diffusion. The latter is performed iteratively in embodiment 2 according to the description above.

We have demonstrated above that when independence is measured by the ADE orthogonality measure as a measure of independence, the optimal extent of separating the texture and cartoon components can be locally estimated. Adjusting the (smearing diffusion preventing) effect of the method according to embodiment 2 of the invention depending on the edge content comes from the parameter image obtained in the steps preceding the application of anisotropic diffusion. For stopping anisotropic diffusion, again the ADE measure of independence is used: by seeking the state of cartoon and texture components closest to orthogonality.

In the method according to the invention, the ADE measure is applied as a measure of independence. In an example the correlation coefficient which can be calculated for the blocks can also be applied as a measure of independence and again the minimum of it is associated with the most independent status of a given block of cartoon image and texture image. In another example the measure of independence of a given block of the cartoon image and texture image can further be determined also by means of so-called local microstructure detectors. In this case, by microstructure detectors, i.e. a texture detector and an edge density detector, we determine the microstructure of the appropriate block of the cartoon image and texture image. In the case of using microstructure detectors, the lowest value of the measure of independence is associated with that cartoon image/texture image pair, in which the values determined by the microstructure detectors differ at the largest extent, i.e. the maximum of their absolute difference is sought.

The invention is not limited to the preferred embodiments described in details, but further variants, combinations, modifications and further developments are possible within the scope of protection determined by the claims.

**Claims**

1. A method for decomposing an image consisting of pixels to cartoon image and/or texture image, in the course of which the image is filtered with a low-pass filter, the method comprises

   - producing a plurality of intermediate cartoon images (S100) by filtering the image with the low-pass filter while changing the value of a filtering parameter of the low-pass filter within a range, and deriving intermediate texture images (S102) by subtracting the intermediate cartoon images from the image,
   and is further **characterized by**
   - dividing the intermediate cartoon images and the intermediate texture images into cells (S110), assigning to each cell a larger block being centered around the cell on the intermediate cartoon images and on the intermediate texture images (S112), and determining, for each value of the filtering parameter and for the block assigned to each cell, by getting the cells one by one, an Angle Deviation Error measure, on the basis of the parts of the intermediate cartoon image and the intermediate texture image falling into that block (S114),
   - determining a filtering parameter image (S120) divided into cells corresponding to the division of the intermediate cartoon images and the intermediate texture images by selecting a filtering parameter value for pixels of each of the cells of the filtering parameter image for which the Angle Deviation Error measure, determined for the block assigned to the corresponding cell of the intermediate cartoon images and the intermediate texture images, is minimal, and
   - determining pixels of the cartoon image and/or the texture image for each of the cells (S130) by selecting for the pixels of the cell corresponding pixels of the intermediate cartoon image and/or intermediate texture image produced with the filtering parameter values selected for the pixels of the corresponding cell of the filtering parameter image.

2. The method according to claim 1, **characterised in that** after the determination of the cartoon image, a further step of anisotropic diffusion is performed on the cartoon image (S140) so that edge constraints of the anisotropic diffusion are initiated with the cartoon image, and the cartoon image is overwritten by the image obtained through the anisotropic diffusion (S142).

3. The method according to claim 2, **characterised by** determining also the texture image after the determination of the cartoon image obtained through the anisotropic diffusion.

4. The method according to claim 2 or claim 3, **characterised by** performing the anisotropic diffusion iteratively so that the Angle Deviation Error measures are determined for each of the blocks, after a given number of consecutive iterations, on the basis of the parts of the intermediate cartoon image and the intermediate texture image falling into the block, and the iteration of the anisotropic diffusion for each cell is stopped when the Angle Deviation Error measure for the block assigned to the cell is minimal.

5. The method according to any of claims 1 to 4, **characterised by** determining the Angle Deviation Error measures by a texture image transformed to zero mean.

6. The method according to any of claims 1 to 5, **characterised in that** the cells and the blocks assigned to the cells have identical shapes.

7. The method according to any of claims 1 to 6, **characterised in that** the side length of the cells is 5 pixels, and the side length of the blocks is 21 pixels.

**Patentansprüche**

1. Verfahren zum Zerlegen eines Bildes, das aus Pixeln eines Karikaturbildes und/oder Texturbildes besteht, wobei das Bild mit einem Tiefpassfilter gefiltert wird, wobei das Verfahren aufweist:

   - Herstellen einer Vielzahl von Zwischenkarikaturbildern (S100) durch Filtern des Bildes mit dem Tiefpassfilter, während der Wert eines Filterparameters des Tiefpassfilters innerhalb eines Bereichs geändert wird und Zwischentexturbilder abgeleitet werden (S102), indem die Zwischenkarikaturbilder vom Bild subtrahiert werden, und ferner **gekennzeichnet ist durch**
   - Teilen der Zwischenkarikaturbilder und der Zwischentexturbilder in Zellen (S110), Zuweisen eines größeren, um die Zelle auf den Zwischenkarikaturbildern und auf den Zwischentexturbildern zentrierten Blocks zu jeder Zelle (S112), und Bestimmen für jeden Wert des Filterparameters und für den jeder Zelle zugewiesenen Block ein Maß eines Winkelabweichungsfehlers auf der Basis der Teile des Zwischenkarikaturbildes und des Zwischentexturbildes, die in den Block fallen (S114), indem die Zellen eine nach der anderen erhalten werden,
   - Bestimmen eines Filterparameterbildes (S120), das in Zellen unterteilt ist, die mit der Aufteilung der Zwischenkarikaturbilder und der Zwischentexturbilder korrespondieren, indem ein Filterparameterwert für Pixel jeder der Zellen des Filterparameterbildes ausgewählt wird, für die das Maß des Winkelabweichungsfehlers, welcher für den der korrespondierenden Zelle des Zwischenkarikaturbildes und des Zwischentexturbildes zugewiesenen Block bestimmt wurde, minimal ist, und
   - Bestimmen von Pixeln des Karikaturbildes und/oder des Texturbildes für jede der Zellen (S130), indem für die Pixel der Zelle korrespondierende Pixel des Zwischenkarikaturbildes und/oder des Zwischentexturbildes ausgewählt werden, die mit den Filterparameterwerten erzeugt wurden, die für die Pixel der korrespondierenden Zelle des Filterparameterbildes ausgewählt wurden.

2. Verfahren nach Anspruch 1, **dadurch gekennzeichnet, dass** nach der Bestimmung des Karikaturbildes ein weiterer Schritt der anisotropen Diffusion auf dem Karikaturbild durchgeführt wird (S140), so dass die Randbedingungen der anisotropen Diffusion mit dem Karikaturbild eingeleitet werden, und das Karikaturbild durch das durch die anisotrope Diffusion erhaltene Bild überschrieben wird (S 142).

3. Verfahren nach Anspruch 2, **dadurch gekennzeichnet, dass** auch das Texturbild nach der Bestimmung des durch die anisotrope Diffusion erhaltenen Karikaturbildes bestimmt wird.

4. Verfahren nach Anspruch 2 oder Anspruch 3, **dadurch gekennzeichnet, dass** die anisotrope Diffusion iterativ durchgeführt wird, so dass Maße für den Winkelabweichungsfehler für jeden der Blöcke bestimmt werden, nach einer gegebenen Anzahl von aufeinanderfolgenden Iterationen, auf der Basis der Teile des Zwischenkarikaturbildes und des Zwischentexturbildes, welche in den Block fallen, und die Iteration der anisotropen Diffusion für jede Zelle gestoppt wird, wenn das Maß des Winkelabweichungsfehlers für den der Zelle zugewiesenen Block minimal ist.

5. Verfahren nach einem der Ansprüche 1 bis 4, **dadurch gekennzeichnet, dass** die Maße des Winkelabweichungsfehlers durch ein Texturbild bestimmt werden, das auf Null transformiert wurde.

6. Verfahren nach einem der Ansprüche 1 bis 5, **dadurch gekennzeichnet, dass** die Zellen und die den Zellen zugewiesenen Blöcke identische Formen haben.

7. Verfahren nach einem der Ansprüche 1 bis 6, **dadurch gekennzeichnet, dass** die Seitenlänge der Zellen 5 Pixel beträgt und die Seitenlänge der Blöcke 21 Pixel beträgt.

**EP 2 791 905 B1**

**Revendications**

1. Procédé pour décomposer une image constituée de pixels en image de dessin animé et/ou en image de texture, au cours duquel l'image est filtrée avec un filtre passe-bas, le procédé comprend de :

   - produire une pluralité d'images de dessin animé intermédiaires (S100) en filtrant l'image avec le filtre passe-bas tout en changeant la valeur d'un paramètre de filtrage du filtre passe-bas à l'intérieur d'un intervalle, et obtenir des images de texture intermédiaires (S102) en soustrayant de l'image les images de dessin animé intermédiaires,
   et est en outre **caractérisé par** le fait de
   - diviser les images de dessin animé intermédiaires et les images de texture intermédiaires en cellules (S110), attribuer à chaque cellule un bloc plus grand étant centré autour de la cellule sur les images de dessin animé intermédiaires et sur les images de texture intermédiaires (S112), et déterminer, pour chaque valeur du paramètre de filtrage et pour le bloc attribué à chaque cellule, en obtenant les cellules une à une, une mesure d'erreur de déviation angulaire, sur la base des parties de l'image de dessin animé intermédiaire et de l'image de texture intermédiaire tombant dans ce bloc (S114),
   - déterminer une image de paramètre de filtrage (S120) divisée en cellules correspondant à la division des images de dessin animé intermédiaires et des images de texture intermédiaires en sélectionnant une valeur de paramètre de filtrage pour des pixels de chacune des cellules de l'image de paramètre de filtrage pour laquelle la mesure d'erreur de déviation angulaire, déterminée pour le bloc attribué à la cellule correspondante des images de dessin animé intermédiaires et des images de texture intermédiaires, est minimale, et
   - déterminer des pixels de l'image de dessin animé et/ou de l'image de texture pour chacune des cellules (S130) en sélectionnant pour les pixels de la cellule, des pixels correspondants de l'image de dessin animé intermédiaire et/ou de l'image de texture intermédiaire produite avec les valeurs de paramètre de filtrage sélectionnées pour les pixels de la cellule correspondante de l'image de paramètre de filtrage.

2. Procédé selon la revendication 1, **caractérisé en ce qu'**après la détermination de l'image de dessin animé, une étape supplémentaire de diffusion anisotrope est réalisée sur l'image de dessin animé (S140) de sorte que des contraintes de bord de la diffusion anisotrope sont initiées avec l'image de dessin animé, et l'image de dessin animé est écrite par-dessus l'image obtenue par la diffusion anisotrope (S142).

3. Procédé selon la revendication 2, **caractérisé par** le fait de déterminer également l'image de texture après la détermination de l'image de dessin animé obtenue par la diffusion anisotrope.

4. Procédé selon la revendication 2 ou la revendication 3, **caractérisé par** l'exécution de la diffusion anisotrope de manière itérative de sorte que les mesures d'erreur de déviation angulaire sont déterminées pour chacun des blocs, après un nombre donné d'itérations consécutives, sur la base des parties de l'image de dessin animé intermédiaire et de l'image de texture intermédiaire tombant dans le bloc, et l'itération de la diffusion anisotrope pour chaque cellule est arrêtée lorsque la mesure d'erreur de déviation angulaire pour le bloc attribué à la cellule est minimale.

5. Procédé selon l'une quelconque des revendications 1 à 4, **caractérisé par** la détermination des mesures d'erreur de déviation angulaire par une image de texture transformée en moyenne nulle.

6. Procédé selon l'une quelconque des revendications 1 à 5, **caractérisé en ce que** les cellules et les blocs attribués aux cellules ont des formes identiques.

7. Procédé selon l'une quelconque des revendications 1 à 6, **caractérisé en ce que** la longueur de côté des cellules est de 5 pixels, et la longueur de côté des blocs est de 21 pixels.

Fig. 1

Fig. 2A

Fig. 2B

Fig. 3A

Fig. 3B

Fig. 4A

Fig. 4B

Fig. 5

Fig. 6

Fig. 7A

Fig. 7B

Fig. 7C

Fig. 7D

(a) AD

(b) BLMV

(c) Embodiment 1

(d) DPCA

(e) DOSV

(f) TVL1

(g) ROF

(h) Embodiment 2

Fig. 8

Fig. 9A

(a) AD

(b) BLMV

(c) Embodiment 1

(d) DPCA

(e) DOSV

(f) TVL1

(g) ROF

(h) Embodiment 2

Fig. 9B

Fig. 10A

(a) AD

(b) BLMV

(c) Embodiment 1

(d) DPCA

(e) DOSV

(f) TVL1

(g) ROF

Fig. 10B

(h) Embodiment 2

Fig. 11A

(a) AD

(b) BLMV

(c) Embodiment 1

(d) DPCA

(e) DOSV

(f) TVL1

(g) ROF

Fig. 11B

(h) Embodiment 2

Fig. 12A

(a) AD

(b) BLMV

(c) Embodiment 1

(d) DPCA

(e) DOSV

(f) TVL1

(g) ROF

Fig. 12B

(h) Embodiment 2

Fig. 13

Producing a plurality of intermediate cartoon images — S100

Deriving intermediate texture images — S102

Dividing intermediate cartoon and texture images into cells — S110

Assigning blocks to cells — S112

Determining measures of independence for the blocks — S114

Determining a parameter image — S120

Determining pixels of the cartoon and/or texture image — S130

Fig. 14

Producing a plurality of intermediate cartoon images | S100

Deriving intermediate texture images | S102

Dividing intermediate cartoon and texture images into cells | S110

Assigning blocks to cells | S112

Determining measures of independence for the blocks | S114

Determining a parameter image | S120

Determining pixels of the cartoon and/or texture image | S130

Performing anisotropic diffusion | S140

Overwriting the cartoon image | S142

Fig. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N. SPRLJAN ; M. MRAK ; E. IZQUIERDO.** Image compression using a cartoon-texture decomposition technique. *Proc. Int. Work. on Image Analysis for Multimedia Interactive Services (WIAMIS),* 2004, 91
- **S. OSHER ; A. SOLE ; L. VESE.** Image decomposition and restoration using total variation minimization and the h-1 norm. *Sci. Multiscale Model. Simul,* 2002, vol. 1, 349-370
- **L. I. RUDIN ; S. OSHER ; E. FATEMI.** Nonlinear total variation based noise removal algorithms. *Phys. D,* 1992, vol. 60, 259-268
- **A. BUADES ; T. LE ; J.-M. MOREL ; L. VESE.** Fast cartoon + texture image filters. *IEEE Transactions on Image Processing,* 2010, vol. 19 (8), 1978-1986
- Image cartoon-texture decomposition and feature selection using the total variation regularized L1 functional. **W. YIN ; D. GOLDFARB ; S. OSHER.** Variational, Geometric, and Level Set Methods in Computer Vision. Springer, 2005, 73-84
- **J.-L. STARCK ; M. ELAD ; D. DONOHO.** Image decomposition via the combination of sparse representations and a variational approach. *IEEE Transactions on Image Processing,* 2005, vol. 14 (10), 1570-1582
- Image decomposition and texture segmentation via sparse representation. **F. ZHANG ; X. YE ; W. LIU.** Signal Processing Letters. IEEE, 2008, vol. 15, 641-644
- **R. SHAHIDI ; C. MOLONEY.** Decorrelating the structure and texture components of a variational decomposition model. *IEEE Transactions on Image Processing,* 2009, vol. 18 (2), 299-309
- Oscillating Patterns in Image Processing and Nonlinear Evolution Equations: The Fifteenth Dean Jacqueline B. **Y. MEYER.** Lewis Memorial Lectures. American Mathematical Society, 2001
- **A. N. TIKHONOV ; V. Y. ARSENIN.** Solutions of ill-posed problems. *Scripta series in mathematics,* 1977
- **D. MUMFORD ; J. SHAH.** Optimal approximations by piecewise smooth functions and associated variational problems. *Communications on Pure and Applied Mathematics,* 1989, vol. 42 (5), 577-685

- **J.-F. AUJOL ; G. GILBOA.** Constrained and snr-based solutions for tv-hilbert space image denoising. *J. Math. Imaging Vis.,* 2006, vol. 26, 217-237
- **P. PERONA ; J. MALIK.** Scale-space and edge detection using anisotropic diffusion. *IEEE Transactions on Pattern Analysis and Machine Intelligence,* 1990, vol. 12, 629-639
- **G. SAPIRO ; D. RINGACH.** Anisotropic diffusion of multivalued images with applications to colour filtering. *IEEE Transactions on Image Processing,* 1996, vol. 5 (11), 1582-1586
- Anisotropic Diffusion in Image Processing. **J. WEICKERT.** Stuttgart. Teubner-Verlag, 1998
- **L. KOVACS ; T. SZIRANYI.** Focus area extraction by blind deconvolution for defining regions of interest. *IEEE Tr. Pattern Analysis and Machine Intelligence,* 2007, vol. 29 (6), 1080-1085
- **D. SZOLGAY ; T. SZIRANYI.** Optimal stopping condition for iterative image deconvolution by new orthogonality criterion. *Electronics Letters,* 2011, vol. 47 (7), 442-444
- **D. GABOR.** Information theory in electron microscopy. *Laboratory Investigation,* 1965, vol. 14 (6), 801-807
- **L. FLORACK.** Image Structure. Kluwer Academic Publishers, 1997
- **L. ALVAREZ ; P.-L. LIONS ; J.-M. MOREL.** Image selective smoothing and edge detection by nonlinear diffusion. II. *SIAM J. Numer. Anal.,* 1992, vol. 29, 845-866
- **I. KOPILOVIC ; T. SZIRANYI.** Artifact reduction with diffusion pre-processing for image compression. *Optical Engineering,* February 2005, vol. 44 (2
- Automated filter parameter selection using measures of noiseness. **A. RAJWADE ; A. RANGARAJAN ; A. BANERJEE.** Canadian Conference on Computer and Robot Vision. IEEE, 31 May 2010, 86-93
- **P. MRÁZEK ; M. NAVARA.** Selection of optimal stopping time for nonlinear diffusion filtering. *International Journal of Computer Vision,* 2003, vol. 52 (2-3), 189-203
- Object Enhancement and Extraction. **J. M. S. PREWITT.** Picture Processing and Psychopictorics. Academic Press, 1970